(19) Europäisches Patentamt
European Patent Office
Office européen des brevets

(11) Veröffentlichungsnummer: **0 004 655**
**B1**

(12) **EUROPÄISCHE PATENTSCHRIFT**

(45) Veröffentlichungstag der Patentschrift: **10.03.82**

(51) Int. Cl.³: **C 09 K 11/06,** G 02 F 1/13

(21) Anmeldenummer: **79100994.7**

(22) Anmeldetag: **31.03.79**

(54) **Verwendung von Farbstoffen zur fluoreszenz-aktivierten Helligkeitsverstärkung.**

(30) Priorität: **07.04.78 DE 2815031**

(43) Veröffentlichungstag der Anmeldung:
**17.10.79 Patentblatt 79/21**

(45) Bekanntmachung des Hinweises auf die Patenterteilung:
**10.03.82 Patentblatt 82/10**

(84) Benannte Vertragsstaaten:
**CH DE FR GB IT**

(56) Entgegenhaltungen:
**DE - A - 1 569 761**
**DE - A - 1 794 381**
**DE - A - 2 008 491**
**DE - A - 2 025 290**
**DE - A - 2 025 291**
**DE - A - 2 554 226**
**DE - A - 2 607 966**
**DE - A - 2 613 891**
**DE - B - 1 293 364**
**DE - B - 1 293 939**
**NL - A - 77 06707**

(73) Patentinhaber: **HOECHST AKTIENGESELLSCHAFT**
**Zentrale Patentabteilung Postfach 80 03 20**
**D-6230 Frankfurt/Main 80 (DE)**

(73) Patentinhaber: **Fraunhofer-Gesellschaft zur Förderung der angewandten Forschung e.V.**
**Leonrodstrasse 54**
**D-8000 München 19 (DE)**

(72) Erfinder: **Kelker, Hans, Prof. Dr.**
**Rauenthaler Weg 26**
**D-6000 Frankfurt/Main 71 (DE)**
Erfinder: **Tröster, Helmut, Dr.**
**Am Erdbeerstein 44**
**D-6240 Königstein/Taunus (DE)**
Erfinder: **Baur, Günter, Dr.**
**Waldhofstrasse 80**
**D-7800 Freiburg (DE)**

(74) Vertreter: **Meyer-Dulheuer, Karl-Hermann, Dr. et al,**
**HOECHST Aktiengesellschaft Zentrale Patentabteilung Postfach 80 03 20**
**D-6230 Frankfurt/Main 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 004 655 B1

Verwendung von Farbstoffen zur fluoreszenz-aktivierten Helligkeitsverstärkung

Gegenstand der Erfindung ist die Verwendung von fluoreszierenden Farbstoffen der Formeln

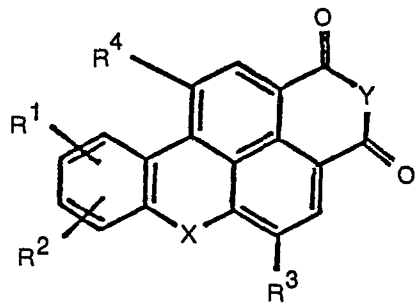

I

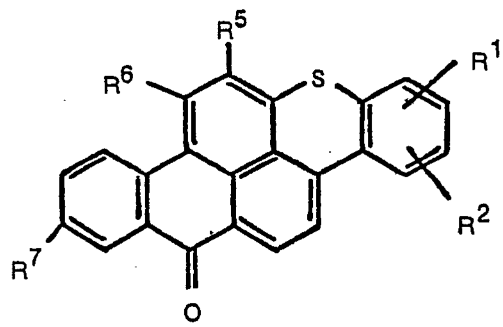

II

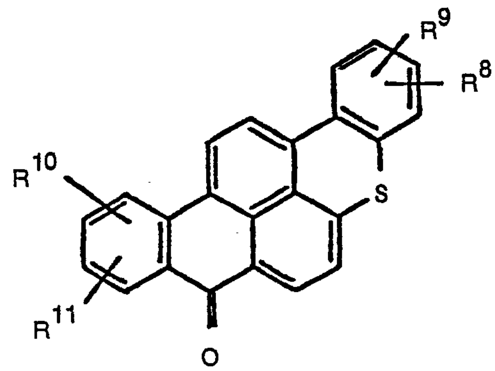

III

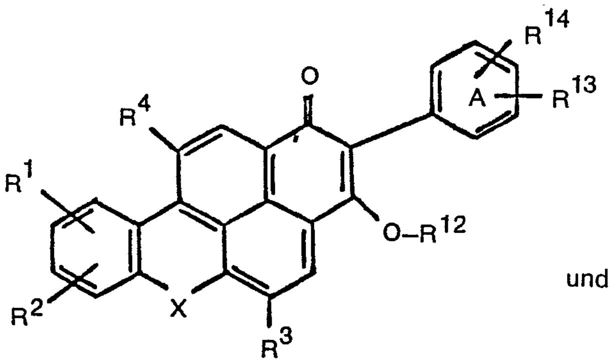

IVa

und

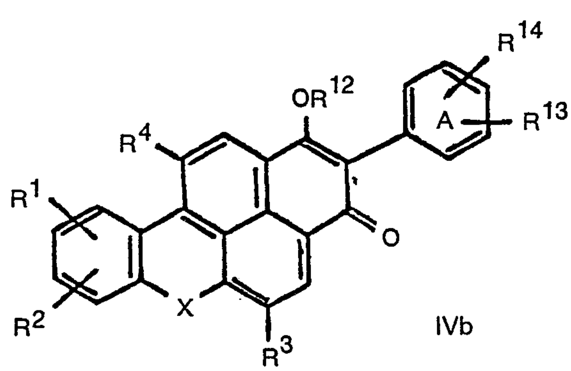

IVb

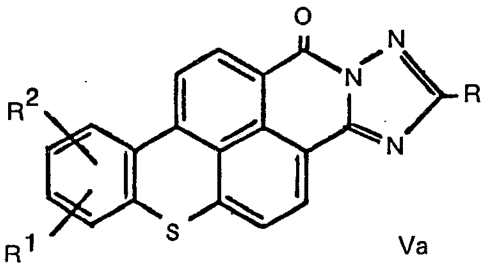

Va

und

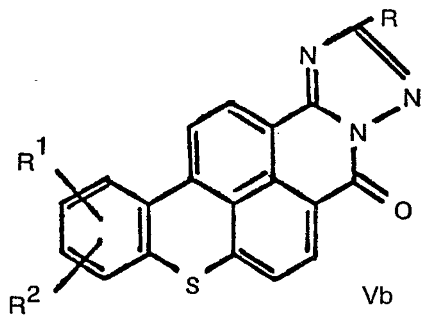

Vb

in denen

X für Sauerstoff oder Schwefel,

Y für Sauerstoff oder eine Gruppe der Formel =N—R steht, in der R für Wasserstoff oder einen Alkyl-, Cycloalkyl oder einen carbocyclischen oder heterocyclischen Arylrest steht,

$R^1$ und $R^2$ für Wasserstoff, Halogen, Alkyl, Alkoxy, Carbalkoxy, Acyloxy, Cyan oder Aryl stehen,

$R^3$ für Wasserstoff oder Alkoxy,

$R^4$ für Wasserstoff oder wenn $R^3$ Alkoxy ist, ebenfalls für Alkoxy steht,

$R^5$ für Wasserstoff, Alkyl, Alkoxy oder Aryl steht,

$R^6$ für Wasserstoff oder Alkyl steht,

$R^7$ für Wasserstoff, Halogen oder Alkoxy steht,

$R^8$, $R^9$, $R^{10}$ und $R^{11}$ für Wasserstoff, Halogen, Alkyl, Alkoxy oder Aryl stehen,

$R^{12}$ für Alkyl, Acyl oder Arylsulfonyl steht oder eine direkte Bildung zu einer freien ortho-Stellung des Phenylrings A darstellt, und

$R^{13}$ und $R^{14}$ für Wasserstoff, Halogen, Alkyl, Alkoxy, Alkylthio, Carbalkoxy, Acyl, Alkylsulfonyl, Acyloxy oder Aryl stehen oder $R^{13}$ und $R^{14}$ zusammen einen annellierten Benzolring darstellen, wobei die genannten Reste jeweils gegebenenfalls durch nicht-fluoreszenzlöschende Reste substituiert sein können, zur passiven Helligkeitsverstärkung von Flüssigkristallanzeigen.

Bevorzugte Ausgestaltungen der Erfindung werden im folgenden wiedergegeben:

Bevorzugt werden fluoreszierende Farbstoffe der Formeln I, IV und V eingesetzt, in denen die Reste R und $R^{12}$ langkettige Alkylreste darstellen, da hierdurch die Löslichkeit der Farbstoffe in Kunststoffen günstig beeinflußt wird. Insbesondere enthalten solche langkettigen Alkylreste bis zu 24, vor allem bis zu 20 Kohlenstoffatome.

Die übrigen in den Formeln I bis V genannten aliphatischen Reste sind bevorzugt kurzkettig und weisenbis zu 6, insbesondere bis zu 4 Kohlenstoffatome auf. Als Arylreste sind Phenylreste bevorzugt. Als Halogenatome kommen in erster Linie Chlor- und Bromatome in Betracht. Als Cycloalkylrest ist Cyclohexyl bevorzugt. Als Acylreste kommen in erster Linie neben niederen Alkanoylresten Benzoylreste in Betracht.

Als nicht-fluoreszenzlöschende Substituenten kommen in erster Linie Alkoxyreste, insbesondere niedere Alkoxygruppen in Frage, die ihrerseits wieder durch Alkoxyreste substituiert sein können, sowie Alkyl- und Phenylreste und Halogenatome.

Farbstoffe der Formeln I bis V sowie ihre Verwendung als Fluoreszenzfarbstoffe zum Färben von synthetischen Polymeren wie u.a. Polymethacrylat sind bekannt, beispielsweise aus den Deutschen Patentschriften 1 293 364, 1 293 939, 1 297 259, 1 569 735, 1 569 761, 1 794 381, 2 008 491, 2 025 290 und 2 025 291 sowie aus der Deutschen Offenlegungsschrift 2 607 966. Dort nicht beschriebene Farbstoffe können in analoger Weise hergestellt werden.

Die Farbstoffe der Formeln I bis V zeichnen sich dadurch aus, daß das Verhältnis der Absorptionsbandbreite zur Emissionsbandbreite groß ist. Durch die gute Trennung von Absorptions- und Fluoreszenzemissionsbanden weisen diese Farbstoffe nur eine geringe Selbstabsorption auf und zeigen dadurch eine hohe Fluoreszenzintensität. Vorteilhaft können auch Mischungen solcher Farbstoffe mit unterschiedlichen Absorptionsgebieten, aber annähernd gleichen Emissionsbanden eingesetzt werden. Darüberhinaus zeigen diese Fluoreszenzfarbstoffe vorzügliche Echtheitseigenschaften, insbesondere eine hohe Lichtechtheit. Weiterhin emittieren diese Farbstoffe im grünstichiggelben bis roten Bereich, d.h. also in Spektralbereichen, die für Flüssigkristallanzeigen besonders erwünscht sind.

Aufgrund dieser Eigenschaften eignen sich die Farbstoffe der Formeln I bis V für Vorrichtungen, bei denen es darauf ankommt, das einfallende Licht optimal mit Hilfe der Fluoreszenzstrahlung auszunutzen. Bevorzugt sind Vorrichtungen, wie sie in den Deutschen Offenlegungsschriften 2 554 226, 2 613 891 und 2 616 669 beschrieben sind.

Die Farbstoffe der Formel I bis V werden vorzugsweise in einer Konzentration von 0,005 bis 0,5%, insbesondere 0,01 bis 0,05%, bezogen auf das Gewicht des Kunststoffs, insbesondere Polymethylmethacrylat, eingesetzt.

In den folgenden Beispielen beziehen sich die Prozentangaben auf das Gewicht.

Beispiel 1

In geschmolzenem Polymethylmethacrylat werden 0,03% des Farbstoffs der Formel

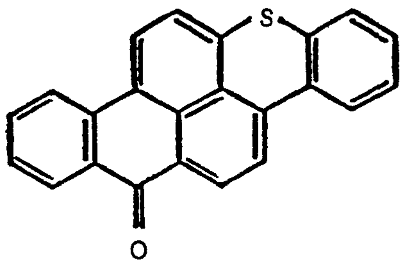

VI

gelöst, gleichmäßig verteilt und zu Fluoreszenzplatten gemäß DE—OS 25 54 226 verarbeitet.

Beispiel 2

Analog Beispiel 1 werden Fluoreszenzplatten hergestellt, die 0,01% des Farbstoffs der Formel

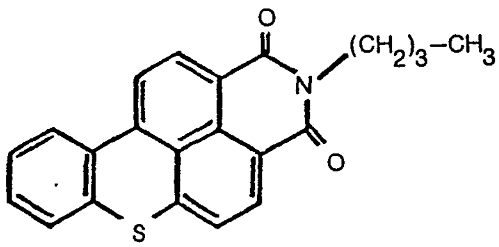

VII

enthalten.

Beispiel 3

Analog Beispiel 1 werden Fluoreszenzplatten hergestellt, die 0,015% des Farbstoffs der Formel

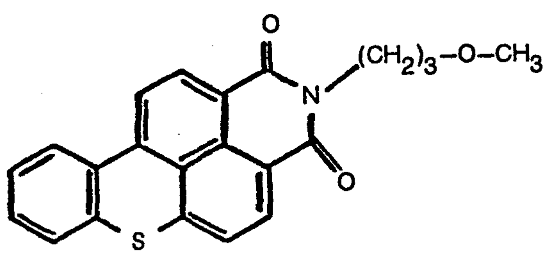

VIII

enthalten.

Beispiel 4

Analog Beispiel 1 werden Fluoreszenzplatten mit einem Gehalt von 0,02% des Farbstoffs der Formel

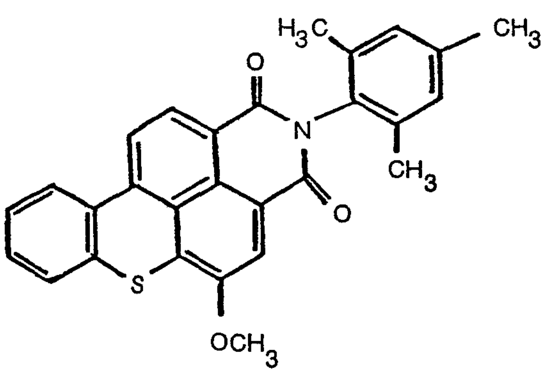

IX

hergestellt.

Beispiel 5

Analog Beispiel 1 werden Fluoreszenzplatten mit einem Gehalt von 0,02% des Farbstoffs der Formel

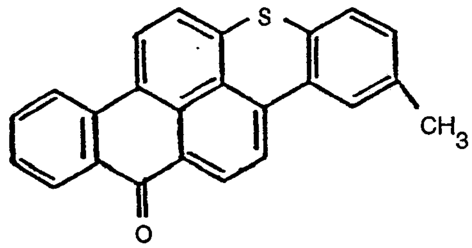

X

hergestellt.

Beispiel 6

Analog Beispiel 1 werden Fluoreszenzplatten hergestellt, die 0,1% des Farbstoffs der Formel

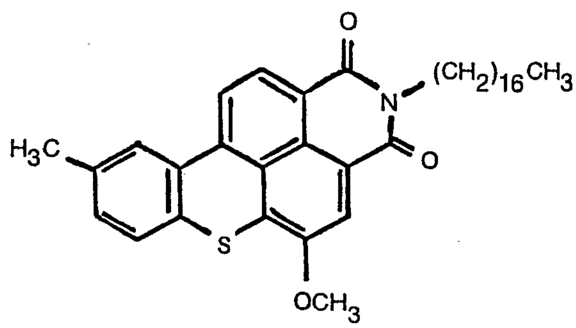

XI

enthalten.

**Patentansprüche**

1. Verwendung von fluoreszierenden Farbstoffen der Formeln

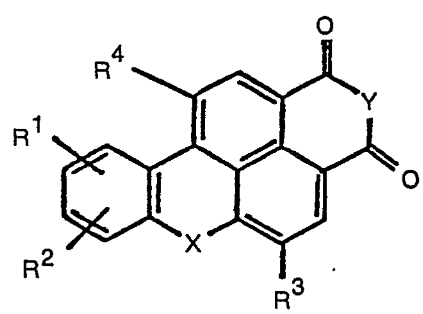

I

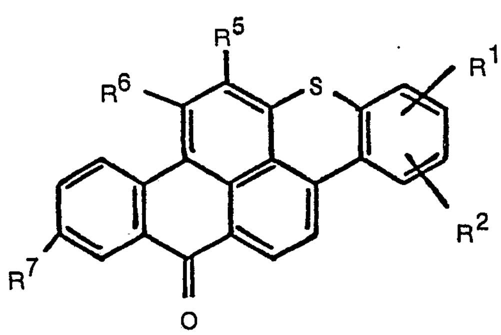

II

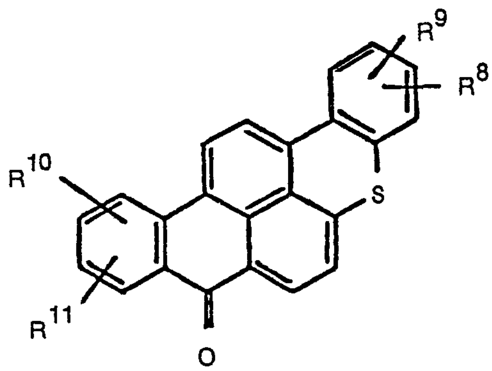

III

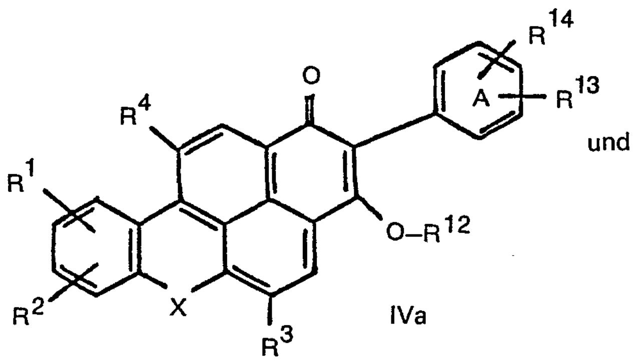

IVa

und

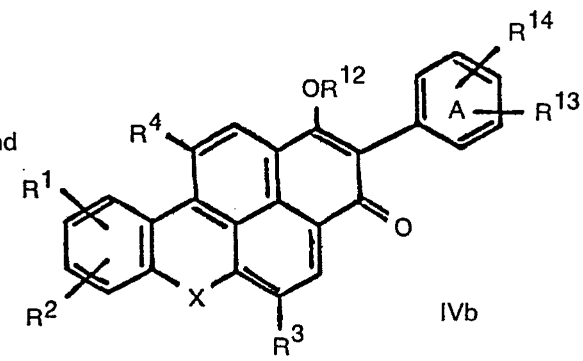

IVb

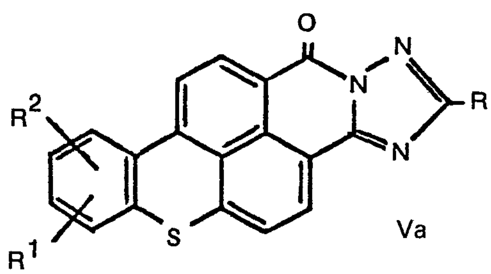

Va

und

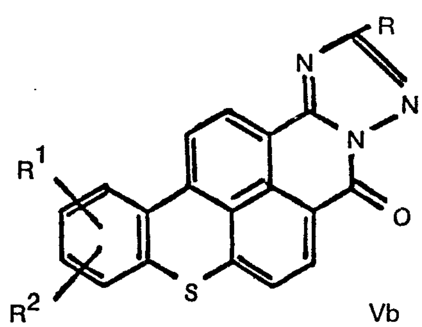

Vb

in denen

X für Sauerstoff oder Schwefel,

Y für Sauerstoff oder eine Gruppe der Formel = N—R steht, in der R für Wasserstoff oder einen Alkyl-, Cycloalkyl oder einen carbocyclischen oder heterocyclischen Arylrest steht,

$R^1$ und $R^2$ für Wasserstoff, Halogen, Alkyl, Alkoxy, Carbalkoxy, Acyloxy, Cyan oder Aryl stehen,

$R^3$ für Wasserstoff oder Alkoxy,

$R^4$ für Wasserstoff oder, wenn $R^3$ Alkoxy ist, ebenfalls für Alkoxy steht,

$R^5$ für Wasserstoff, Alkyl, Alkoxy oder Aryl steht,

$R^6$ für Wasserstoff oder Alkyl steht,

$R^7$ für Wasserstoff, Halogen oder Alkoxy steht,

$R^8$, $R^9$, $R^{10}$ und $R^{11}$ für Wasserstoff, Halogen, Alkyl, Alkoxy oder Aryl stehen,

$R^{12}$ für Alkyl, Acyl oder Arylsulfonyl steht oder eine direkte Bindung zu einer freien ortho-Stellung des Phenylrings A darstellt, und

$R^{13}$ und $R^{14}$ für Wasserstoff, Halogen, Alkyl, Alkoxy, Alkylthio, Carbalkoxy, Acyl, Alkylsulfonyl, Acyloxy oder Aryl stehen oder $R^{13}$ und $R^{14}$ zusammen einen annellierten Benzolring darstellen, wobei die genannten Reste jeweils gegebenenfalls durch nicht-fluoreszenzlöschende Reste substituiert sein können, zur passiven Helligkeitsverstärkung von Flüssigkristallanzeigen.

2. Verwendung gemäß Anspruch 1 unter Benützung der Farbstoffe der Formeln I bis V in einer Konzentration von 0,005 bis 0,5 Gewichtsprozent zur Einfärbung von Kunststoffen.

3. Verwendung gemäß Anspruch 2 unter Benützung der Farbstoffen der Formeln I bis V in einer Konzentration von 0,01 bis 0,05 Gewichtsprozent.

4. Verwendung gemäß Anspruch 2 und 3 unter Benützung der Farbstoffe der Formeln I bis V zur Einfärbung von Polymethacrylat.

## Claims

1. Application of fluorescent dyestuffs of the formulae

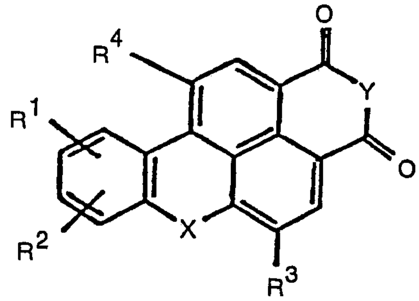

I

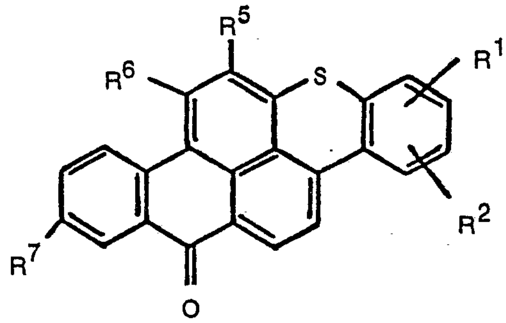

II

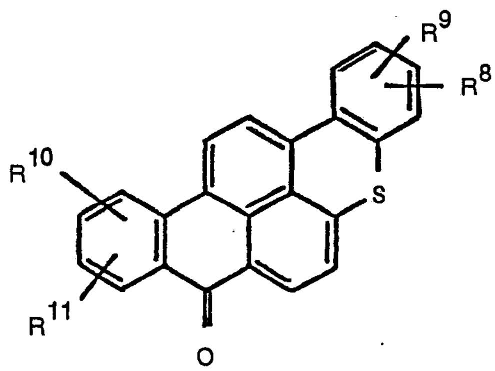

III

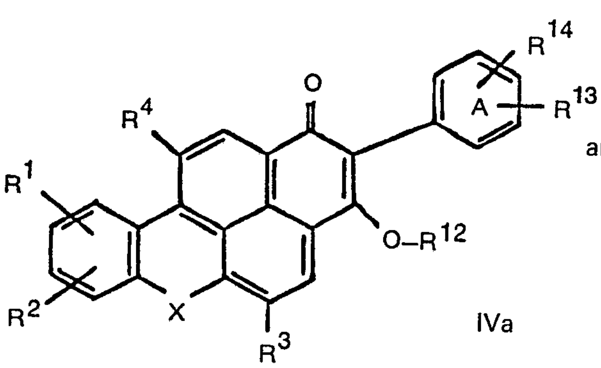

IVa

and

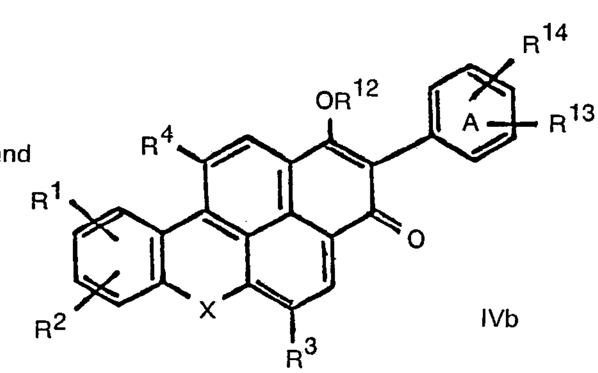

IVb

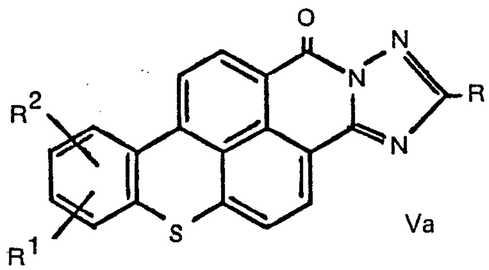

Va

and

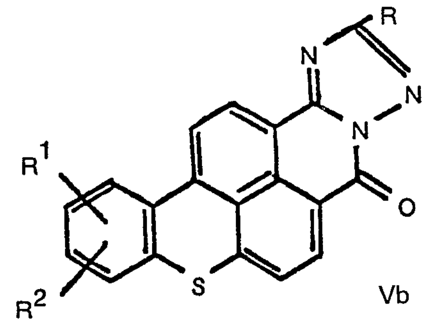

Vb

in which

X stands for oxygen or sulfur,

Y stands for oxygen or a group of the formula =N—R, in which R stands for hydrogen or an alkyl, cycloalkyl or a carbocyclic or heterocyclic aryl residue,

$R^1$ and $R^2$ stand for hydrogen, halogen, alkyl, alkoxy, carbalkoxy, acyloxy, cyano or aryl,

$R^3$ stands for hydrogen or alkoxy,

$R^4$ stands for hydrogen or, if $R^3$ is alkoxy it likewise stands for alkoxy,

$R^5$ stands for hydrogen, alkyl, alkoxy or aryl,

$R^6$ stands for hydrogen or alkyl,

$R^7$ stands for hydrogen, halogen or alkoxy,

$R^8$, $R^9$, $R^{10}$ and $R^{11}$ stand for hydrogen, halogen, alkyl, alkoxy or aryl,

$R^{12}$ stands for alkyl acyl or arylsulfonyl or for a direct bond to a free ortho-position of the phenyl nucleus A, and

$R^{13}$ and $R^{14}$ stand for hydrogen, halogen, alkyl, alkoxy, alkylthio, carbalkoxy, acyl, alkylsulfonyl, acyloxy or aryl or $R^{13}$ and $R^{14}$ together designate an annellated benzene nucleus,

wherein the designated residues in any case can be substituted by residues which do not extinguish the fluorescence,

for the passive enhancement of the brightness of liquid crystal displays.

2. Application according to claim 1 while using dyestuffs of the formulae I to V in a concentration of 0.005 to 0.5% by weight for the coloration of plastics.

3. Application according to claim 2 while using dyestuffs of the formulae I to V in a concentration of 0.01 to 0.05% by weight.

4. Application according to claims 2 and 3 while using dyestuffs of the formulae I to V for the coloration of polymethacrylate.

**Revendications**

1. Application de colorants fluorescents répondant aux formules

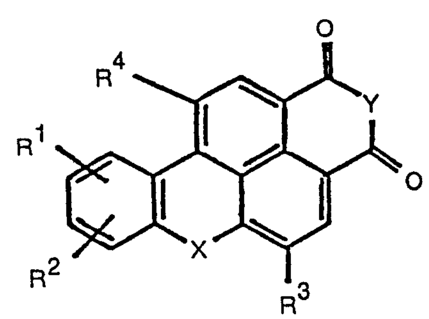

I

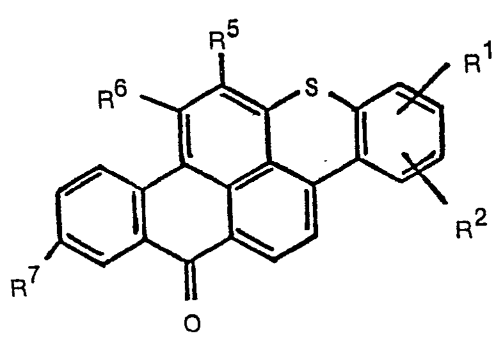

II

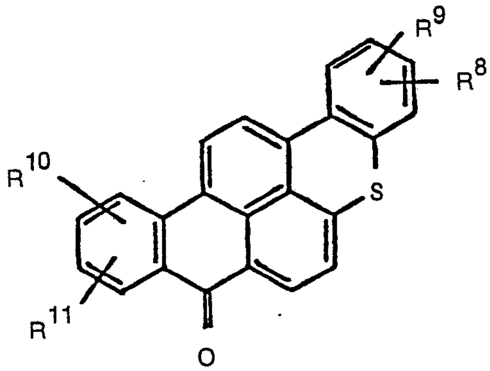

III

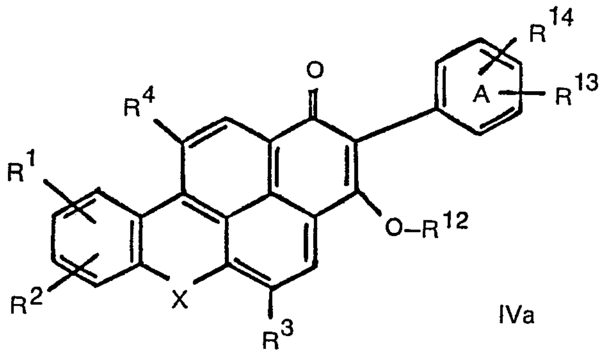

IVa

et

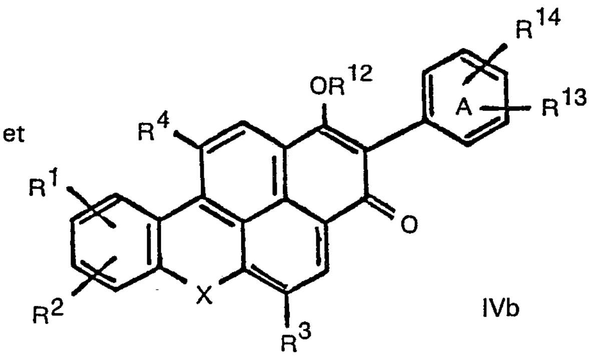

IVb

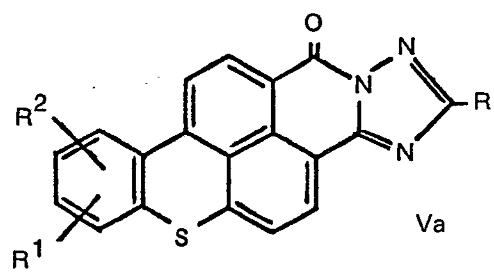

Va

et

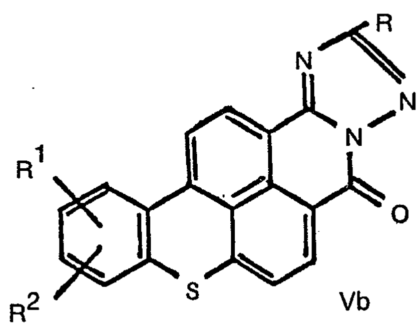

Vb

dans lesquelles

X représente l'oxygène ou le soufre,

Y représente l'oxygène ou un groupe =N—R dans lequel R désigne l'hydrogène, un radical alkyle, un radical cycloalkyle ou un radical aryle carbocyclique ou hétérocyclique,

$R^1$ et $R^2$ représentent chacun l'hydrogène, un halogène ou un radical alkyle, alcoxy, alcoxycarbonyle, acyloxy, cyano ou aryle,

$R^3$ représente l'hydrogène ou un radical alcoxy,

$R^4$ représente l'hydrogène ou, lorsque $R^3$ est un alcoxy, peut aussi représenter un alcoxy,

$R^5$ représente l'hydrogène ou un radical alkyle, alcoxy ou aryle,

$R^6$ représente l'hydrogène ou un radical alkyle,

$R^7$ représente l'hydrogène, un halogène ou un radical alcoxy,

$R^8$, $R^9$, $R^{10}$ et $R^{11}$ représentent chacun l'hydrogène, un halogène ou un radical alkyle, alcoxy ou aryle,

$R^{12}$ représente un radical alkyle, acyle ou arylsulfonyle ou une liaison directe aboutissant à une position ortho libre du noyau phénylique A, et

$R^{13}$ et $R^{14}$ représentent chacun l'hydrogène, un halogène ou un radical alkyle, alcoxy, alkylthio, alcoxycarbonyle, acyle, alkylsulfonyle, acyloxy ou aryle, ou $R^{13}$ et $R^{14}$ forment ensemble un noyau benzénique condensé,

et dans laquelle les divers radicaux mentionnés peuvent chacun porter comme substituants, des radicaux n'inhibant pas la fluorescence,

pour le renforcement passif de la clarté d'indications par cristaux liquides.

2. Application selon la revendication 1 selon laquelle on utilise des colorants de formules I à V en une concentration de 0,005 à 0,5% en poids pour la coloration de matières plastiques dans la masse.

3. Application selon la revendication 2 selon laquelle on utilise les colorants de formules I à V en une concentration de 0,01 à 0,05% en poids.

4. Application selon l'une des revendications 2 et 3 selon laquelle on utilise les colorants de formules I à V pour la coloration du polyméthacrylate dans la masse.